# EUROPÄISCHE PATENTSCHRIFT

(11) **EP 0 205 101 B1**
(45) Veröffentlichungstag und Bekanntmachung des Hinweises auf die Patenterteilung: **22.09.1993**
(21) Anmeldenummer: 86107637.0
(22) Anmeldetag: 05.06.1986
(51) Int. Cl.: G06F 11/00, G06F 11/16

(54) **Verfahren zum Betrieb einer Datenverarbeitungsanlage**
Method of operating a data processing system
Méthode pour l'utilisation d'une installation de traitement de données

(30) Priorität: 14.06.1985 DE 3521465
(43) Veröffentlichungstag der Anmeldung: 17.12.1986
(73) Patentinhaber: SIEMENS AKTIENGESELLSCHAFT, 80333 München (DE)
(72) Erfinder: Beck, Albert, Dipl.-Ing., D-7514 Leopoldshafen (DE); Block, Siegfried, Dipl.-Ing., D-6744 Kandel (DE); Burgard, Rolf, Dipl.-Ing., D-6729 Rheinzabern (DE); Hanss, Karl, Dipl.-Ing., D-6744 Kandel (DE)

(56) Entgegenhaltungen:
- EP-A- 0 094 746
- FR-A- 2 132 097
- US-A- 3 593 302

## Beschreibung

Die Erfindung betrifft ein Verfahren zum Betrieb einer Datenverarbeitungsanlage gemäß dem Oberbegriff des Anspruchs 1.

Aus der EP-OS 0 094 746 ist eine Datenverarbeitungsanlage bekannt, deren Zentraleinheit einerseits über einen E/A-Bus mit peripheren Geräten, wie Platten- und Bandspeicher, und andererseits über einen Terminalbus mit einer Bedienungseinheit verbunden ist. Solche Datenverarbeitungsanlagen haben den Nachteil, daß sie im Falle einer Störung auf einer Busleitung oder in der Zentraleinheit insgesamt ausfallen können.

In Prozeßleitsystemen werden Busverbindungen in verschiedenen Hierarchieebenen eingesetzt. Während die sogenannten Fernbuslinien häufig redundant ausgeführt werden, sind die innerhalb der Einbauschränke angeordneten Busleitungen, welche die Zentraleinheit mit den peripheren Einheiten bzw. mit einer Bedien- und Beobachtungseinheit verbinden, nicht redundant. Eine Störung auf einer solchen schrankinternen Busleitung kann zum Ausfall des Systems führen, wobei dann nicht mehr auf den Prozeß eingewirkt werden kann, auch nicht von Hand. Auch Rückmeldungen aus dem Prozeß sind dann nicht mehr möglich.

Ein redundantes Prozeßleitsystem ist in der Zeitschrift "Siemens-Energietechnik", 1984, Seiten 245 bis 249 beschrieben. In diesem System sind die Zentralprozessoren und sämtliche Busleitungen, die Speicher und bei Bedarf auch die peripheren Einheiten redundant ausgeführt. Ein solches System hat zwar eine hohe Verfügbarkeit, erfordert jedoch einen erheblichen Aufwand.

Aus der FR-A-2 132 097 ist eine Einrichtung zum Regeln eines Prozesses mit einer Zentraleinheit bekannt, die über eine Leitung mit peripheren Einheiten und mit einer Bedien- und Beobachtungseinheit verbunden ist. Diese Einheit ist ferner an eine erste Schaltvorrichtung angeschlossen, welche über weitere Leitungen mit den peripheren Einheiten verbunden ist. An der Bedien- und Beobachtungseinheit ist eine zweite Schaltvorrichtung betätigbar, die dazu dient, die Verbindung zwischen verschiedenen Einrichtungen und Anzeigegeräten dieser Einheit und der Zentraleinheit herzustellen. Solange die Reglereinrichtung im sogenannten Digitalbetrieb arbeitet, sind die über die erste Schaltvorrichtung führenden Verbindungen zu den peripheren Einheiten blockiert. Schaltet die Zentraleinheit dagegen bei Ausfall oder Störung auf einen Analogbetrieb um, dann werden die Verbindungen über die erste Schaltvorrichtung freigegeben und die über die zweite Schaltvorrichtung führenden Verbindungen blockiert. Dadurch wird eine Regeleinrichtung geschaffen, die vorteilhaft eine digitale und eine analoge Regelung kombiniert.

Der vorliegenden Erfindung liegt die Aufgabe zugrunde, ein Verfahren der eingangs angegebenen Art anzugeben, mit dem eine hohe Anlagenverfügbarkeit erzielt wird.

Diese Aufgabe wird erfindungsgemäß mit den im kennzeichnenden Teil des Anspruchs 1 angegebenen Maßnahmen gelöst.

Mit dem erfindungsgemäßen Verfahren findet ein Signalverkehr im störungsfreien Betrieb zwischen der Bedien- und Beobachtungseinheit, der Zentraleinheit und den peripheren Einheiten einerseits und zwischen der Bedien- und Beobachtungseinheit, den Schaltmitteln und den peripheren Einheiten andererseits statt. Die Zentraleinheit regelt ihren Signalverkehr mit den peripheren Einheiten sowie mit der Bedien- und Beobachtungseinheit. Das Schaltmittel in Form einer Übertragungssteuerung erfaßt die an den peripheren Einheiten auftretenden Signale und führt sie der Bedien- und Beobachtungseinheit zu. Fällt z. B. die Zentraleinheit aus oder tritt eine Störung auf den Busleitungen auf, läuft der Signalverkehr zwischen den peripheren Einheiten und von diesen über die Übertragungssteuerung zur Bedien- und Beobachtungseinheit ungestört weiter, so daß zumindest im Minimalumfang die Betriebsfähigkeit des Systems aufrechterhalten wird. Fällt dagegen die Übertragungssteuerung oder eine der Leitungen aus, bleibt der Signalverkehr über die Zentraleinheit ungestört.

Eine weitere Ausgestaltung der Erfindung ergibt sich aus dem Unteranspruch.

Anhand der Zeichnungen, in denen Prinzipschaltbilder von zwei Ausführungsbeispielen dargestellt sind, werden im folgenden die Erfindung sowie weitere Ausgestaltungen und Ergänzungen näher beschrieben und erläutert.

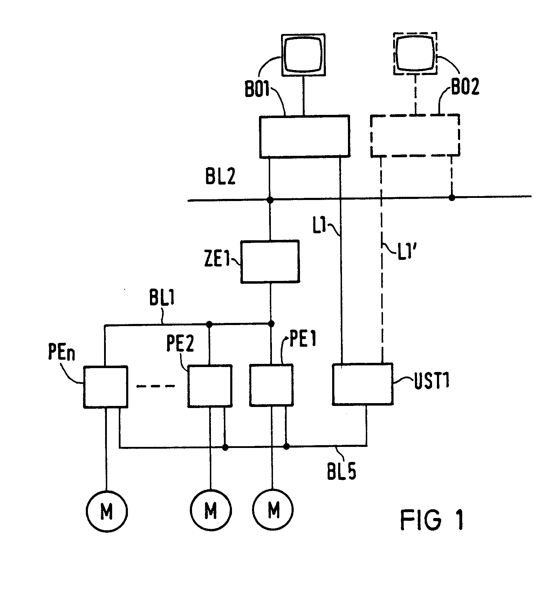

In Figur 1 ist mit ZE1 die Zentraleinheit eines Prozeßleitsystems bezeichnet, die einerseits über einen E/A-Bus BL1 mit peripheren Einheiten PE1, PE2 ... PEn und über eine Busleitung BL2 mit einer Bedien- und Beobachtungseinheit BO1 sowie gegebenenfalls mit einer gestrichelt gezeichneten zweiten Bedien- und Beobachtungseinheit BO2 verbunden ist. An die peripheren Einheiten PE1, PE2 ... PEn sind Prozeßsignalformer und Stellglieder M angeschlossen, wobei an jede periphere Einheit eine Gruppe von Signalformern und Stellgliedern angeschlossen sein kann.

Die bisher beschriebene Anordnung mit den Einheiten M, PE1, PE2 ... PEn, ZE1 und BO1 ist ein voll funktionsfähiges Prozeßleitsystem, das aber den Nachteil hat, daß es im Falle einer Störung auf den Busleitungen BL1, BL2 oder in der Zentraleinheit ZE1 ausfällt. Auf dem Monitor der Einheit BO1 erscheinen keine Anzeigen mehr über den Prozeßzustand, und es ist auch nicht möglich, mit Handbefehlen, die in die Bedien- und Beobachtungseinheit BO1 eingegeben werden, Stellglieder M zu betätigen. Um diesen Mangel zu beheben, weisen die peripheren Einheiten PE1, PE2 ... PEn jeweils eine zweite Schnittstelle auf, die von der ersten mit der Busleitung BL1 verbundene elektrisch und funktionell unabhängig ist und über die sie an eine Busleitung BL5 angeschlossen sind, über welche die Einheiten PE1, PE2 ... PEn zwischen sich und einer Übertragungssteuerung UST1 Signale übertragen können. Mit letzterer ist über eine Leitung L1 die Bedien- und Beobachtungseinheit BO1 sowie gegebenenfalls über eine Leitung L1' die zweite Bedien- und Beobachtungseinheit BO2 verbunden. Mit einer solchen Anordnung kann der Signalverkehr in dem Prozeßleitsystem in zwei voneinander unabhängige Gruppen unterteilt werden. Die Zentraleinheit ZE1 regelt ihren Signalverkehr mit den peripheren Einheiten PE1, PE2 ... PEn sowie mit der Bedien- und Beobachtungseinheit BO1 und gegebenfalls benachbarten Zentraleinheiten über die Busleitungen BL1 und BL2. Die Übertragungssteuerung UST1, erfaßt die an den zweiten Schnittstellen der peripheren Einheiten PE1, PE2 ... PEn auftretenden Signale und gibt sie, soweit sie für die Bedien- und Beobachtungseinheiten BO1, BO2 bestimmt sind, auf die Leitungen L1 und L1'.

Fällt nun die Zentraleinheit ZE1 aus oder tritt eine Störung auf den Busleitungen BL1, BL2 auf, läuft der Signalverkehr zwischen den peripheren Einheiten und von diesen zur Bedien- und Beobachtungseinheit BO1 ungestört weiter, so daß zumindest in minimalem Umfang die Betriebsfähigkeit des Systems aufrechterhalten wird. Z. B. können über die Leitungen L1 und BL5 Handbefehle und Rückmeldungen übertragen werden, so daß der Prozeß von Hand gesteuert werden kann. Fällt die Übertragungssteuerung UST1 oder eine der Leitungen BL5, L1 aus, bleibt der Signalverkehr über die Zentraleinheit ZE1 ungestört. Es wird damit bei geringem Aufwand eine hohe Anlagenverfügbarkeit erzielt. In der gestrichelt gezeichneten Ausführungsform des Systems nach Figur 1 sind zwei Bedien- und Beobachtungseinheiten sowie zwei Signalwege zwischen diesen und der Übertragungssteuerung UST1 verbunden, so daß auch bei Ausfall einer Bedien-und Beobachtungseinheit das Prozeßleitsystem noch bedient werden kann.

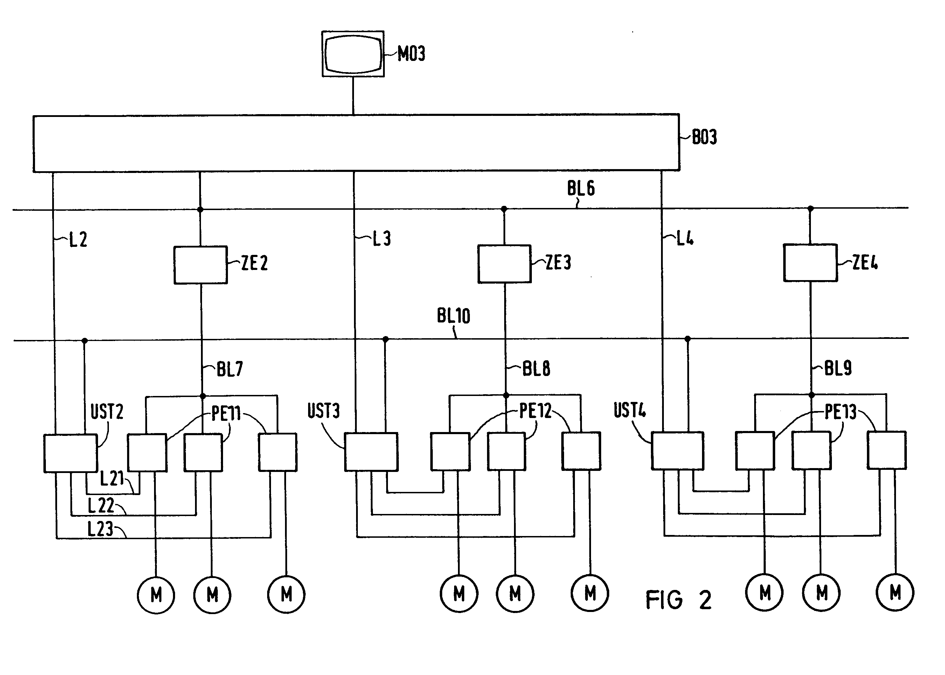

Das Prinzipschaltbild eines Prozeßleitsystems mit mehreren Zentraleinheiten ist in Figur 2 dargestellt. Diese Zentraleinheiten sind mit ZE2, ZE3, ZE4 bezeichnet. Sie sind über eine Busleitung BL6 mit einer Bedien- und Beobachtungseinheit BO3 mit einem Monitor MO verbunden. An die Busleitung BL6 können ferner weitere Zentraleinheiten und Bedien- und Beobachtungseinheiten angeschlossen sein. Über Busleitungen BL7, BL8, BL9 sind an jede Zentraleinheit periphere Einheiten PE11, PE12, PE13 angeschlossen, die ihrerseits Prozeßsignalgeber und Stellglieder M ansteuern. Die peripheren Einheiten PE11 sind sternförmig über Leitungen L21, L22, L23 mit einer Übertragungssteuerung UST2 verbunden, die den Signalverkehr der peripheren Einheit PE11 untereinander und mit der Bedien- und Beobachtungseinheit BO3 regelt. Der sternförmige Anschluß der peripheren Einheiten PE11 ergibt den Vorteil, daß die Leitungen L21, L22, L23 und die zugehörigen Schnittstellen der peripheren Einheiten PE11 entkoppelt sind, so daß sich eine Störung auf einer Leitung nicht auf die anderen Leitungen auswirken kann und damit eine hohe Verfügbarkeit erzielt wird. Entsprechend sind die weiteren peripheren Einheiten PE12, PE13 sternförmig mit Übertragungssteuerungen UST3 bzw. UST4 verbunden. Die Übertragungssteuerungen UST2, UST3, UST4 sind im Ausführungsbeispiel sternförmig an die Bedien- und Beobachtungseinheit BO3 angeschlossen, jedoch wäre auch hier eine Busleitung möglich.

Eine weitere Schnittstelle der Übertragungssteuerungen UST2, UST3, UST4 ist mit einer Busleitung BL10 verbunden, an die eine zweite Bedien- und Beobachtungseinheit angeschlossen sein kann, mit der aber auch weitere Übertragungssteuerungen verbunden sein können. Die Schnittstellen der Übertragungssteuerungen UST2, UST3, UST4 sind elektrisch und funktionell voneinander unabhängig, so daß bei Störung einer Schnittstelle die anderen unbeeinflußt weiterarbeiten, ja sogar den Signalverkehr von der gestörten übernehmen können. Insgesamt ergibt sich eine Datenverarbeitungsanlage, die mehrere voneinander unabhängige Signalwege zwischen den peripheren Elementen und den Bedien-und Beobachtungseinheiten enthält, wobei der Signalverkehr aufgeteilt ist in Signalverkehr aus überlagerten Komponenten (Zentraleinheiten ZE2, ZE3, ZE4) und Signalverkehr aus der unterlagerten Ebene (periphere Einheiten PE11, PE12, PE13). Wie schon anhand von Figur 1 erläutert, wird auch bei Ausfall der Zentraleinheiten die Funktionsfähigkeit der Anlage zumindest in minimalen Umfang aufrechterhalten.

## Patentansprüche

1. Verfahren zum Betrieb einer Datenverarbeitungsanlage, die mindestens eine Zentraleinheit (ZE1; ZE2, ZE3, ZE4) aufweist, die über eine E/A-Busleitung (BL1; BL7, BL8, BL9) mit peripheren Einheiten (PE1 ... PEn; PE11 ... PE13) und ferner mit mindestens einer Bedien- und Beobachtungseinheit (BO1, BO2; BO3) verbunden ist, welche über Schaltmittel (L1, UST1, BL5; L2, UST2, L21, L22, L23, ...) an den peripheren Einheiten (PE1 ...) angeschlossen ist, wobei im Falle einer Störung der Zentraleinheit (ZE1; ...) der Signalverkehr zwischen den peripheren Einheiten (PE1 ...), den Schaltmitteln (L1, UST1, BL5) und der Bedien- und Beobachtungseinheit (BO1 ...) stattfindet,
**dadurch gekennzeichnet,**
- daß im Falle einer Störung der Schaltmittel (L1, UST1, BL5; ...) ein Signalverkehr zwischen der Zentraleinheit (ZE1; ZE2 ...) und den peripheren Einheiten (PE1 ...) stattfindet und
- daß im störungsfreien Betrieb der Signalverkehr zwischen der Bedien- und Beobachtungseinheit (BO1 ...), der Zentraleinheit (ZE1; ...) und den peripheren Einheiten (PE1 ...) einerseits und zwischen der Bedien- und Beobachtungseinheif (BO1 ...), den Schaltmitteln (L1, UST1, BL5; ...) und den peripheren Einheiten (PE1 ...) andererseits stattfindet.

2. Verfahren nach Anspruch 1, **dadurch gekennzeichnet,**
- daß der Signalverkehr zwischen der Bedien- und Beobachtungseinheit (BO1, BO2; BO3) und den peripheren Einheiten (PE1 ...) über mehrere unabhängige Signalwege stattfindet.

## Claims

1. Method for operating a data-processing system which has at least one central unit (ZE1; ZE2, ZE3, ZE4) which, by way of an I/O bus line (BL1; BL7, BL8, BL9), is connected with peripheral units (PE1 ... PEn; PE11 ... PE13) and, furthermore, is connected with at least one control and monitoring unit (BO1, BO2; BO3) which by way of switching means (L1, UST1, BL5; L2, UST2, L21, L22, L23, ...) is connected to the peripheral units (PE1 ...), in which in the case of a disturbance of the central unit (ZE1; ...) signal traffic occurs between the peripheral units (PE1 ...), the switching means (L1, UST1, BL5) and the control and monitoring unit (BO1 ...), characterised
- in that in the case of a disturbance of the switching means (L1, UST1, BL5; ...) signal traffic occurs between the central unit (ZE1; ZE2...) and the peripheral units (PE1 ...); and
- in that during disturbance-free operation signal traffic occurs between the control and monitoring unit (BO1 ...), the central unit (ZE1; ...) and the peripheral units (PE1 ...), on the one hand, and between the control and monitoring unit (BO1 ...), the switching means (L1, UST1, BL5; ...) and the peripheral units (PE1 ...), on the other hand.

2. Method according to claim 1, characterised
- in that signal traffic occurs between the control and monitoring unit (BO1, BO2; BO3) and the peripheral units (PE1 ...) by way of several independent signal paths.

## Revendications

1. Procédé pour l'exploitation d'une installation de traitement de données, qui comporte au moins une unité centrale (ZE1; ZE2, ZE3, ZE4), qui est reliée, par l'intermédiaire d'une ligne de bus entrée/sortie (BL1; BL7, BL8, BL9), à des unités périphériques (PE1 ... PEn; PE11 ... PE13) et, en outre, à au moins une unité de service (serveur), et d'observation (BO1, BO2; BO3), qui est reliée, par l'intermédiaire de moyens de commutation (L1, UST1, BL5; L2, UST2, L21, L22, L23, ...), aux unités périphériques (PE1 ...), le trafic des signaux ayant lieu, dans le cas d'une perturbation de l'unité centrale (ZE1; ...), entre les unités périphériques (PE1 ...), les moyens de commutation (L1, UST1, BL5) et l'unité de service et d'observation (BO1 ...),
caractérisé en ce que
- dans le cas d'une perturbation des moyens de commutation (L1, UST1, BL5; ...), un trafic de signaux a lieu entre l'unité centrale (ZE1; ZE2...) et les unités périphériques (PE1 ...) et
- dans le cas d'un fonctionnement sans perturbation, le trafic des signaux a lieu, d'une part, entre l'unité de service et d'observation (BO1 ...), l'unité centrale (ZE1; ...) et les unités périphériques (PE1 ...), et, d'autre part, entre l'unité de service et d'observation (BO1 ...), les moyens de commutation (L1, UST1, BL5; ...) et les unités périphériques (PE1 ...).

2. Procédé suivant la revendication 1, caractérisé en ce que
- le trafic de signaux entre l'unité de service et d'observation (BO1, BO2; BO3) et les unités périphériques (PE1 ...) a lieu par l'intermédiaire de plusieurs voies de signaux indépendantes.
